(19) Europäisches Patentamt
European Patent Office
Office européen des brevets

(11) EP 3 813 228 A1

(12) EUROPEAN PATENT APPLICATION

(43) Date of publication:
28.04.2021 Bulletin 2021/17

(51) Int Cl.:
H02J 13/00 (2006.01)          G06Q 10/04 (2012.01)
G06Q 50/06 (2012.01)

(21) Application number: 20193588.9

(22) Date of filing: 31.08.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.10.2019 JP 2019193720

(71) Applicant: KABUSHIKI KAISHA TOSHIBA
Minato-ku
Tokyo
105-0023 (JP)

(72) Inventors:
• Kaneko, Yu
Tokyo (JP)
• Saito, Takeshi
Tokyo (JP)

(74) Representative: Hoffmann Eitle
Patent- und Rechtsanwälte PartmbB
Arabellastraße 30
81925 München (DE)

(54) MONITORING-CONTROL SYSTEM, MONITORING-CONTROL METHOD, AND MONITORING-CONTROL COMPUTER PROGRAM PRODUCT

(57) According to an arrangement, a monitoring-control system (10) includes a control target determination unit (46) and an execution target determination unit (48B). The control target determination unit (46) determines a target distributed power source (16) that is the monitoring-control target the distributed power source (16) in accordance with electrical-power control requirement information indicating electrical-power control requirements for the distributed power source connected to a network. The execution target determination unit (48B) determines, as an execution target system that executes a monitoring-control service for the target distributed power source (16), an information processing system (13) for which an operational cost of the monitoring-control service in accordance with the electrical-power control requirement information is equal to or lower than a given cost among a plurality of information processing systems (13) connected communicably to the target distributed power source (16).

FIG.2

**Description**

FIELD

Arrangements described herein relate generally to a monitoring-control system, a monitoring-control method, and a monitoring-control computer program product.

BACKGROUND

A system is known that connects distributed power sources such as a solar power generator and a secondary battery to a network and performs monitoring and control of these distributed power sources.

For example, a technology is known that a monitoring-control service having higher importance on real-time performance is allocated at a place closer to a monitoring target distributed power source. Additionally, another technology is known that a monitoring-control service is allocated at an allocation place where communication cost and communication delay are minimum. Examples of conventional technology are described in Japanese Patent Application Laid-open No. 2017-143365.

However, communication cost and communication delay are not only the factors that affect monitoring-control cost. Thus, conventionally, it has been difficult to reduce monitoring-control cost of a plurality of distributed power sources connected to a network.

BRIEF DESCRIPTION OF THE DRAWINGS

FIG. 1 is a block diagram illustrating a network configuration of a service program allocation system of an arrangement;
FIG. 2 is a functional block diagram illustrating a functional configuration of a monitoring-control system of the arrangement;
FIG. 3 is a flowchart illustrating the process of monitoring-control processing of the arrangement; and
FIG. 4 is a diagram illustrating a hardware configuration of the arrangement.

DETAILED DESCRIPTION

Examples of a monitoring-control system, a monitoring-control method, and a monitoring-control program according to an arrangement will be described below in detail with reference to the accompanying drawings.

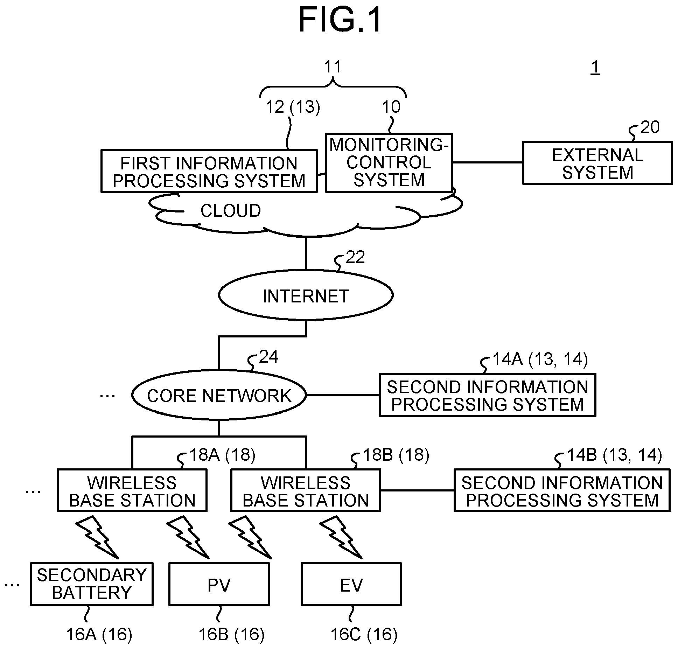

FIG. 1 is a block diagram illustrating an exemplary network configuration of a service program allocation system 1 of the present arrangement.

The service program allocation system 1 includes a monitoring-control system 10, an information processing system 13, a distributed power source 16, a wireless base station 18, and an external system 20.

The monitoring-control system 10, the information processing system 13, the distributed power source 16, the wireless base station 18, and the external system 20 are communicably connected to one another via an internet 22, a core network 24, the wireless base station 18, and the like.

The distributed power source 16 is a power source device connected to a network and controllable by another device via the network. The distributed power source 16 is connected to the network via the wireless base station 18 by long-distance wireless communication such as 5G (5th Generation; fifth generation mobile communication system) or 4G (4th Generation; fourth generation mobile communication system).

The distributed power source 16 is, for example, a secondary battery, a PV (photovoltaic generator or solar power generator), an EV (electric vehicle), or a wind power generation facility. The kind of the distributed power source 16 is not limited thereto.

The service program allocation system 1 includes a plurality of the distributed power sources 16. The present arrangement describes an example in which the service program allocation system 1 includes a secondary battery 16A, a PV 16B, and an EV 16C as the distributed power sources 16. The number of the distributed power sources 16 included in the service program allocation system 1 is not limited to three.

The wireless base station 18 is a facility at which an antenna configured to send radio wave for performing wireless communication with electronic devices such as the distributed power source 16 and the information processing system 13 is installed. In the present arrangement, each of the distributed power sources 16 is connected to the core network 24 via the wireless base station 18.

The external system 20 is a computer of an electrical-power trading market or a system that operates in cooperation therewith. The electrical-power trading market is a market that adjusts electrical-power reception. In the electrical-power trading market, real-time and minute electrical-power trading is performed in some cases. The electrical-power trading market may include a market (electrical-power peer-to-peer (P2P) market) in which consumers directly trade electrical power.

The external system 20 outputs electrical-power control requirement information for the distributed power sources 16 to the monitoring-control system 10. Details of the electrical-power control requirement information will be described later.

The monitoring-control system 10 monitors and controls the distributed power sources 16 based on the electrical-power control requirement information. The monitoring-control system 10 is constituted by one or a plurality of computers. In the present arrangement, the monitoring-control system 10 allocates a monitoring-control service to a particular information processing system 13. The monitoring-control service is an application program for monitoring and control the distributed power source 16. In other words, the monitoring-control service is software configured to perform, with the distributed power sources 16, communication for monitoring and control. Details of functions of the monitoring-control system 10 will be described later.

The monitoring-control system 10 is communicably connected to the distributed power sources 16 at least via the internet 22. In the present arrangement, the monitoring-control system 10 is communicably connected to the distributed power sources 16 via the internet 22, the core network 24, and the wireless base station 18.

The information processing system 13 is capable of executing the monitoring-control service. The service program allocation system 1 includes a plurality of the information processing systems 13. The information processing systems 13 are communicably connected to the monitoring-control system 10 and the distributed power sources 16. The information processing systems 13 are each constituted by one or a plurality of computers.

In the present arrangement, the information processing systems 13 are classified into a first information processing system 12 and a second information processing system 14.

The first information processing system 12 is the information processing system 13 connected communicably to the distributed power sources 16 at least via the internet 22. In the present arrangement, the first information processing system 12 is communicably connected to the distributed power sources 16 via the internet 22, the core network 24, and the wireless base station 18.

The first information processing system 12 is constituted by one or a plurality of computers. The first information processing system 12 and the monitoring-control system 10 may be configured as one cloud system 11. The first information processing system 12 may be configured as a system integrated with the monitoring-control system 10.

The second information processing system 14 is the information processing system 13 connected communicably to the distributed power sources 16, not via the internet 22. The second information processing system 14 is constituted by one or a plurality of computers. The second information processing system 14 functions as an edge server installed closer to a control target distributed power source 16. The second information processing system 14 is referred to as multi-access edge computing (MEC) in some cases.

The present arrangement describes an example in which the service program allocation system 1 includes a second information processing system 14A and a second information processing system 14B as the second information processing systems 14. The second information processing system 14A is the second information processing system 14 connected communicably to the distributed power sources 16 via the core network 24 and the wireless base stations 18. The second information processing system 14B is the second information processing system 14 connected communicably to each of the distributed power sources 16 via the corresponding wireless base station 18. In other words, the wireless base station 18 is a wireless-communication base station installed on a side closer to the second information processing system 14 and the distributed power source 16 than the first information processing system 12.

The internet 22 and the core network 24 are exemplary networks.

The internet 22 is a global information communication network via which a plurality of computer networks are mutually connected by using internet protocol (IP). The core network 24 is a communication network provided by a telecommunications carrier that provides the wireless base stations 18. The telecommunications carrier is also referred to as a provider.

The core network 24 is a communication network, the communication quality of which is guaranteed as compared to the internet 22.

The internet 22 is a network between the cloud system 11 and the core network 24. The communication quality of the internet 22 is of a best-effort type, in other words, communication delay and the communication success rate are not guaranteed. Thus, communication delay that occurs between the cloud system 11 and each of the distributed power sources 16 is larger than communication delay that occurs between the corresponding second information processing system 14 and the distributed power source 16.

In the present arrangement, the monitoring-control system 10 determines, in accordance with the operational cost of each of the information processing systems 13, the information processing system 13 as the target of execution of the monitoring-control service. Then, the monitoring-control system 10 allocates the monitoring-control service to an execution target system that is the determined information processing system 13. Accordingly, the monitoring-control service is executed for the determined information processing system 13.

In a known conventional technology, the monitoring-control service having higher importance on real-time performance is higher is allocated at a place closer to the distributed power source 16 as a monitoring target. However, this conventional technology is a technology of selecting a place at which the monitoring-control service is allocated in accordance with the importance of real-time performance to maximize benefit of a provider that provides an MEC environment. Thus, such a conventional technology is not intended to reduce the operational cost of the information processing system 13 that executes the monitoring-control service.

In another known conventional technology focused on the operational cost of the information processing system 13, an allocation place at which communication traffic and communication delay are minimum is selected. However, not only communication traffic and communication delay are the factors that affect the operational cost of the information processing system 13.

Thus, with the conventional technologies, it has been difficult to reduce monitoring-control cost of a plurality of distributed power sources connected to a network.

In view of the above, the monitoring-control system 10 of the present arrangement uses the operational cost of the monitoring-control service. The monitoring-control system 10 determines, as an execution target system on which the monitoring-control service is to be executed, the information processing system 13, the operational cost of which is equal to or lower than a given cost.

The following describes the monitoring-control system 10 of the present arrangement in detail.

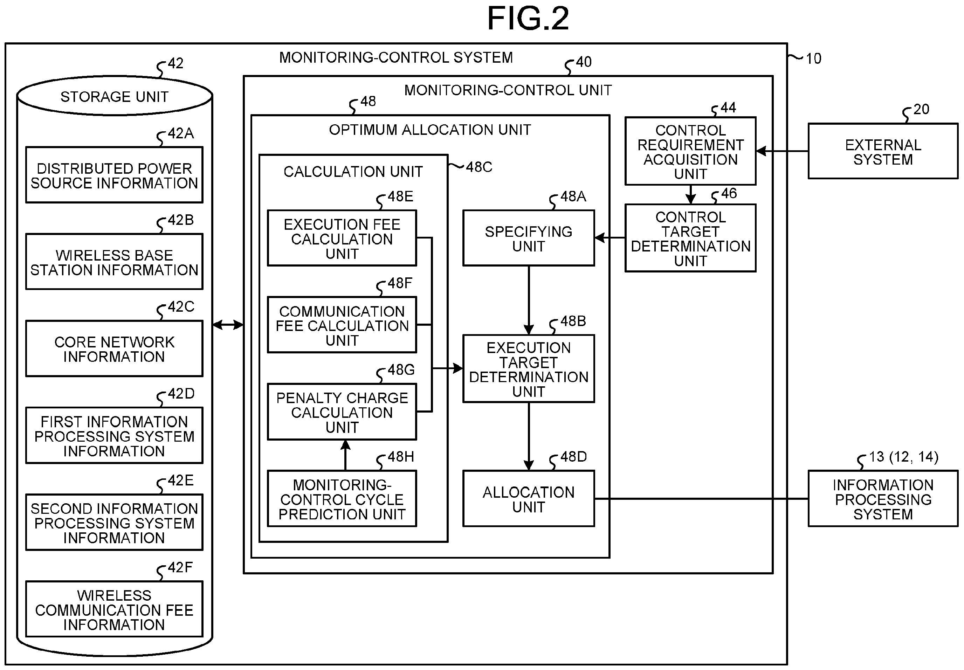

FIG. 2 is a functional block diagram illustrating an exemplary functional configuration of the monitoring-control system 10.

The monitoring-control system 10 includes a monitoring-control unit 40 and a storage unit 42. The monitoring-control unit 40 and the storage unit 42 are communicably connected to each other.

The storage unit 42 stores various kinds of data. In the present arrangement, the storage unit 42 stores distributed power source information 42A, wireless base station information 42B, core network information 42C, first information processing system information 42D, second information processing system information 42E, and wireless communication fee information 42F. Details of these pieces of information will be described later.

The storage unit 42 is, for example, a semiconductor memory element such as a random access memory (RAM) or a flash memory, a hard disk, or an optical disk. The storage unit 42 may be a storage device provided outside the monitoring-control system 10. Alternatively, the storage unit 42 may be a storage medium. Specifically, the storage medium may be for computer programs and various kinds of information that are temporary stored or stored by being downloaded via a local area network (LAN), the internet, and the like. The storage unit 42 may be constituted by a plurality of storage media.

At least one of the storage unit 42 and the monitoring-control unit 40 may be implemented on an external device such as a server device connected to a network. In addition, at least one of functional components included in the monitoring-control unit 40 and to be described later may be implemented on an external device such as a server device connected to the monitoring-control unit 40 via a network.

The monitoring-control unit 40 includes a control requirement acquisition unit 44, a control target determination unit 46, and an optimum allocation unit 48. The optimum allocation unit 48 includes a specifying unit 48A, an execution target determination unit 48B, and an allocation unit 48D. A calculation unit 48C includes an execution fee calculation unit 48E, a communication fee calculation unit 48F, a penalty charge calculation unit 48G, and a monitoring-control cycle prediction unit 48H.

At least one of the control requirement acquisition unit 44, the control target determination unit 46, the optimum allocation unit 48, the specifying unit 48A, the execution target determination unit 48B, the calculation unit 48C, the allocation unit 48D, the execution fee calculation unit 48E, the communication fee calculation unit 48F, the penalty charge calculation unit 48G, and the monitoring-control cycle prediction unit 48H is achieved by, for example, one or more processors. For example, each above-described component may be achieved by execution of a computer program by a processor such as a central processing unit (CPU), in other words, may be achieved by software. Each above-described component may be achieved by a processor such as a dedicated integrated circuit (IC), in other words, hardware. Each above-described component may be achieved by both of software and hardware. When a plurality of processors are used, each processor may achieve one of the components or two or more of the components.

The control requirement acquisition unit 44 acquires the electrical-power control requirement information from the external system 20. The electrical-power control requirement information is information indicating electrical-power control requirement for the distributed power source 16. The electrical-power control requirement information is defined in accordance with, for example, a trading result at an electrical power market that is the external system 20.

For example, the electrical-power control requirement information includes information of a target region in which electrical-power control is performed, a date on which electrical-power control is performed, a time slot in which electrical-power control is performed, the total amount of electrical power scheduled to be used, the amount of electrical power scheduled to be used per unit time, the amount of output from the control target distributed power source 16, the cycle (such as a one-second cycle) of monitoring and control of the distributed power source 16, the contents of control, and the like. The controlling specifics are information indicating any of charging, discharging, charging-discharging.

Specifically, for example, the electrical-power control requirement information includes information indicating "providing electrical power in the amount of 50 kWh in the designated time slot". For example, the electrical-power control requirement information includes information indicating "providing a right to control the distributed power source 16 having a 10-kW output in the cycle of one second in a designated time slot". For example, the electrical-power control requirement information includes information indicating "control of charging and discharging of the distributed power source 16 having a 20-kW output in the cycle of one second in a designated time slot to stabilize an electrical power system of X area".

The control target determination unit 46 determines a target distributed power source that is the monitoring-control target distributed power source 16 based on the electrical-power control requirement information acquired by the control requirement acquisition unit 44. In the present arrangement, the control target determination unit 46 determines a target distributed power source by using the electrical-power control requirement information and the distributed power source information 42A.

The distributed power source information 42A is a database in which the identification information (ID) of the distributed power source 16, the name of the distributed power source 16, the kind of the distributed power source 16, the output of the distributed power source 16, the installation place of the distributed power source 16, the communication address of the distributed power source 16, the name of a telecommunications carrier used by the distributed power source 16 for wireless communication, and the kind of communication media are associated with one another.

The kind of the distributed power source 16 is, for example, a secondary battery or a PV. The output of the distributed power source 16 is the maximum value of electrical power that the distributed power source 16 can supply or charge. The telecommunications carrier name is the name of a communication carrier used by the distributed power source 16 for wireless communication. The kind of communication media is the kind of wireless communication used by the distributed power source 16 for wireless communication. The kind of communication media is, for example, 4G or 5G.

The control target determination unit 46 determines, as a target distributed power source, the distributed power source 16 that satisfies electrical-power control requirements indicated by the electrical-power control requirement information. The target distributed power source is the monitoring-control target distributed power source 16. The number of target distributed power sources determined by the control target determination unit 46 is not limited to one. The control target determination unit 46 may determine a plurality of distributed power sources 16 as target distributed power sources.

For example, the control target determination unit 46 determines the distributed power source 16 that is installed at a position where the distributed power source 16 can supply electrical power to a target region in which electrical-power control is performed, that can charge or discharge electrical power in the total amount of electrical power scheduled to be used and the amount of electrical power scheduled to be used per unit time in a time slot in which electrical-power control is performed on a date on which electrical-power control is performed, that can charge or discharge electrical power that satisfies the output amount of the control target distributed power source 16, and that can perform charging or discharging control indicated in the contents of control, these requirements being indicated by the electrical-power control requirement information. The control target determination unit 46 may determine one or a plurality of the distributed power sources 16 satisfy electrical-power control requirements.

The optimum allocation unit 48 determines the information processing system 13 that executes the monitoring-control service so that the operational cost of monitoring and control the distributed power source 16 determined as a target distributed power source by the control target determination unit 46 is equal to or lower than a given cost. In other words, the optimum allocation unit 48 determines the execution place of the monitoring-control service so that the operational cost is equal to or lower than the given cost. The number of monitoring-control services is not limited to one but may be two or more.

The optimum allocation unit 48 includes the specifying unit 48A, the execution target determination unit 48B, the calculation unit 48C, and the allocation unit 48D.

The specifying unit 48A specifies the candidate information processing system 13 that executes the monitoring-control service from among the information processing systems 13. The specifying unit 48A specifies, in accordance with the installation place of the monitoring-control target distributed power source 16, the candidate information processing system 13 that executes the monitoring-control service.

In the present arrangement, the specifying unit 48A specifies, as the candidate information processing system 13 that executes the monitoring-control service, the first information processing system 12 and at least one of the second information processing systems 14.

Specifically, the specifying unit 48A constantly specifies the first information processing system 12 as a candidate that executes the monitoring-control service. In some cases, the cloud system 11 is provided by each of a plurality of providers. In such a case, the specifying unit 48A constantly specifies, as a candidate that executes the monitoring-control service, the first information processing system 12 included in each of the cloud systems 11.

In addition, the specifying unit 48A specifies, as a candidate that executes the monitoring-control service, at least one of the second information processing systems 14A included in the service program allocation system 1.

The specifying unit 48A specifies, as the candidate information processing system 13 that executes the monitoring-control service, the second information processing system 14 connected communicably to the monitoring-control target distributed power source 16 determined by the control target determination unit 46 in a range of a given communication distance among the second information processing systems 14 included in the service program allocation system 1.

Specifically, the specifying unit 48A specifies, as the candidate information processing system 13 that executes the monitoring-control service, the information processing system 13 for which the communication distance is equal to or shorter than a set distance with respect to one or a plurality of the wireless base stations 18 that are present in a range of the preset wireless communication distance from the monitoring-control target distributed power source 16. The communication distance being equal to or shorter than a preset distance means network-wise proximity.

The specifying unit 48A may specify the candidate information processing system 13 that executes the monitoring-control service by using the distributed power source information 42A, the wireless base station information 42B, the core network information 42C, the first information processing system information 42D, and the second information processing system information 42E.

The wireless base station information 42B is a database in which the identification information (ID) of each of the wireless base stations 18, the name of a telecommunications carrier that manages the wireless base station 18, the identification information (ID) of the second information processing system 14 connected to the wireless base station 18, the identification information (ID) of the distributed power source 16 connected to the wireless base station 18, the kind of communication media, the quality of communication, the range of wireless communication, and the like are associated with one another.

The core network information 42C is a database in which the identification information (ID) of the core network 24, the name of a telecommunications carrier that manages the core network 24, the identification information (ID) of each of the wireless base stations 18 connected to the core network 24, the identification information (ID) of each second information processing system 14 connected to the core network 24, and the like are associated with one another.

The first information processing system information 42D is a database in which the identification information (ID) of the first information processing system 12, the name of a telecommunications carrier used by the first information processing system 12, a communication fee, and a use fee of the first information processing system 12 per unit time are associated with one another.

The second information processing system information 42E is a database in which the identification information (ID) of each second information processing system 14, the name of a telecommunications carrier used by the second information processing system 14, a communication fee, and a use fee of the second information processing system 14 per unit time are associated with one another.

The specifying unit 48A first specifies the wireless base station 18 wirelessly connected to the control target distributed power source 16. The specifying unit 48A may specify the wireless base station 18 by searching the distributed power source information 42A and the wireless base station information 42B. Then, the specifying unit 48A reads the identification information (ID) of the second information processing system 14 connected to the wireless base station 18, which is associated with the ID of the specified wireless base station 18 in the wireless base station information 42B. Through these pieces of processing, the specifying unit 48A specifies the second information processing system 14 as a candidate that executes the monitoring-control service.

The identification information (ID) of the second information processing system 14 connected to the wireless base station 18, which is registered in the wireless base station information 42B, is the identification information of the second information processing system 14 that is close to the wireless base station 18. Being close means being directly connected to the wireless base station 18 or being connected to the core network 24 connected to the wireless base station 18.

For example, a case is assumed in which the secondary battery 16A in FIG. 1 is the monitoring-control target distributed power source 16. In this case, the specifying unit 48A specifies, as the candidate information processing system 13 that executes the monitoring-control service, the first information processing system 12 and the second information processing system 14A connected to the secondary battery 16A via a wireless base station 18A and the core network 24.

For example, another case is assumed in which the PV 16B in FIG. 1 is the monitoring-control target distributed power source 16. In this case, the specifying unit 48A specifies, as the candidate information processing system 13 that executes the monitoring-control service, the first information processing system 12, the second information processing system 14A connected to the PV 16B via the wireless base station 18A and the core network 24, and the second information processing system 14B connected to a wireless base station 18B.

The description continues with reference to FIG. 2. The execution target determination unit 48B determines, as an execution target system, the information processing system 13 for which the operational cost is equal to or lower than a given cost among the information processing systems 13 connected communicably to the monitoring-control target distributed power source 16.

In the present arrangement, the execution target determination unit 48B determines, as an execution target system, the information processing system 13 for which the operational cost is equal to or lower than the given cost among the information processing systems 13 specified by the specifying unit 48A.

The execution target system is the information processing system 13 that executes the monitoring-control service for the monitoring-control target distributed power source 16 determined by the control target determination unit 46.

The execution target determination unit 48B determines, as an execution target system, the information processing system 13 for which the operational cost is equal to or lower than the given cost by using the operational cost calculated by the calculation unit 48C. The given cost may be determined in advance.

The calculation unit 48C calculates the operational cost of each of the information processing systems 13 specified by the specifying unit 48A.

The operational cost is a cost that incurs when the monitoring-control service is executed at the information processing system 13. The operational cost is a cost that incurs when the monitoring-control service in accordance with the electrical-power control requirement information acquired by the control requirement acquisition unit 44 is executed by the information processing system 13. In the present arrangement, the operational cost includes an execution fee. The execution fee is a fee that incurs by using the information processing system 13. Specifically, the execution fee is a fee that incurs by using the first information processing system 12 or the second information processing system 14.

Alternatively, the operational cost may include the execution fee and a penalty charge. The penalty charge is a penalty charge that incurs when any electrical-power control requirement indicated by the electrical-power control requirement information acquired by the control requirement acquisition unit 44 is not satisfied. The operational cost may further include a wireless communication fee.

The present arrangement describes an example in which the operational cost includes the execution fee, the penalty charge, and the wireless communication fee. Specifically, in the present arrangement, the operational cost of each of the information processing systems 13 is expressed by Expression (1) below.

$$\text{Cost } (Di, Xj, R) = \text{Execution fee } (Xj, R) + \text{Wireless communication fee } (Di, R) + \text{Penalty charge } (Xj, R) \qquad (1)$$

In Expression (1), Di represents the distributed power source 16 determined as a monitoring-control target, i represents an integer equal to or larger than one and a value for uniquely identifying each of the distributed power sources 16, Xj represents the information processing system 13 specified by the specifying unit 48A, j represents an integer equal to or larger than one and a value for uniquely identifying each of the information processing systems 13, and R represents information related to monitoring and control of the distributed power source 16 among the electrical-power control requirement information acquired by the control requirement acquisition unit 44.

Specifically, the information R is a time slot in which electrical-power control is performed, the cycle of monitoring and control of the distributed power source 16, and the like included in the electrical-power control requirement information. The time slot in which electrical-power control is performed is a time slot in which the information processing system 13 executes the monitoring-control service. The amount of traffic caused by monitoring and control is determined when the cycle of monitoring and control of the distributed power source 16 is specified.

Specifically, Cost (Di, Xj, R) is the operational cost of the information processing system 13 and means that the operational cost is determined by the monitoring-control target distributed power source 16, the information processing system 13, and the information related to monitoring and control of the distributed power source 16.

The execution fee (Xj, R) means that the fee of execution of the monitoring-control service by the information processing system 13 is determined by the information processing system 13 and the information related to monitoring and control of the distributed power source 16.

The penalty charge (Xj, R) means that the penalty charge is determined by the information processing system 13 and the information related to monitoring and control of the distributed power source 16.

In the calculation unit 48C, the functional components included in the calculation unit 48C calculate the execution fee, the wireless communication fee, and the penalty charge for each of the information processing systems 13 specified by the specifying unit 48A.

Specifically, the calculation unit 48C includes the execution fee calculation unit 48E, the communication fee calculation unit 48F, the penalty charge calculation unit 48G, and the monitoring-control cycle prediction unit 48H.

The execution fee calculation unit 48E calculates the execution fee. The execution fee depends on a fee menu provided by the provider of the information processing system 13 or the like. Thus, the execution fee calculation unit 48E specifies, based on the first information processing system information 42D and the second information processing system information 42E, the name (provider name) of a telecommunications carrier used by the information processing system 13 specified by the specifying unit 48A. Then, the execution fee calculation unit 48E acquires, from the external system 20 or the like, a use menu provided by the telecommunications carrier of the specified telecommunications carrier name. The execution fee calculation unit 48E can calculate the execution fee for each of the information processing systems 13 by using the acquired use menu and the electrical-power control requirement information acquired by the control requirement acquisition unit 44.

The information processing system 13 executes the monitoring-control service by temporarily producing an instance of a virtual machine or a container in some cases. In such a case, the execution fee calculation unit 48E selects an instance type having calculation capacity necessary and sufficient for executing the monitoring-control service. The execution fee calculation unit 48E specifies the unit price of the execution fee by selecting the instance type. Then, the execution fee calculation unit 48E may calculate the execution fee for each of the information processing systems 13 by using the specified unit price and the electrical-power control requirement information. In this case, the execution fee calculation unit 48E can calculate the execution fee independently from a particular telecommunications carrier (provider).

In the present arrangement, the execution fee calculation unit 48E calculates the execution fee for each of the information processing systems 13 by using Expression (2) below.

$$\text{Execution fee } (Xj, R) = \text{Calculation fee } (Xj, R) +$$
$$\text{Data communication fee } (Xj, R) \qquad\qquad (2)$$

The execution fee $(Xj, R)$ is an execution fee predicted to incur when the monitoring-control service is executed by the information processing system 13. The execution fee $(Xj, R)$ is determined by $Xj$ representing the information processing system 13 and $R$ representing the information related to monitoring and control of the distributed power source 16.

The calculation fee $(Xj, R)$ is determined by $Xj$ representing the information processing system 13 and $R$ representing the information related to monitoring and control of the distributed power source 16. Specifically, the calculation fee $(Xj, R)$ is determined in accordance with the number of CPUs and the memory amount needed for execution of the monitoring-control service by the information processing system 13. The number of CPUs and the memory amount may be calculated in advance by performing operation verification of the monitoring-control service at each of the information processing systems 13 in advance.

For example, a case is assumed in which the information processing system 13 executes the monitoring-control service by using a virtual machine having necessary calculation resources. In this case, at the information processing system 13, a calculation fee incurs proportionally to the specification and use time of the virtual machine. A calculation fee for each specification and a calculation fee for each unit time may be stored in each of the first information processing system information 42D and the second information processing system information 42E in advance. For these pieces of information, information released by the provider of the information processing system 13 may be used.

The execution fee calculation unit 48E may calculate the calculation fees by using these pieces of information.

The data communication fee $(Xj, R)$ is a fee that incurs when the monitoring-control service performs data communication with an external network upon execution of the monitoring-control service in the information processing system 13. The data communication fee $(Xj, R)$ is determined by $Xj$ representing the information processing system 13 and $R$ representing the information related to monitoring and control of the distributed power source 16.

The execution fee calculation unit 48E calculates the data communication fee $(Xj, R)$ based on the relation between the amount of communication data used by the information processing system 13 and its fee. The relation between the data amount and the fee is determined by the provider used by the information processing system 13 in advance. Thus, a communication fee indicating the relation between the data amount and the fee may be stored in the second information processing system information 42E and the second information processing system information 42E in advance. Then, the execution fee calculation unit 48E may calculate the data communication fee $(Xj, R)$ by using the second information processing system information 42E, the second information processing system information 42E, and the electrical-power control requirement information. In addition, the execution fee calculation unit 48E may calculate the execution fee $(Xj, R)$ by using Expression (2) described above.

The following describes the wireless communication fee $(Di, r)$. The wireless communication fee $(Di, r)$ is calculated by the communication fee calculation unit 48F included in the calculation unit 48C.

The wireless communication fee $(Di, r)$ is a fee that incurs when the information processing system 13 uses wireless communication such as 4G or 5G. The wireless communication fee is determined by the fee of a wireless service used by the control target distributed power source 16 for wireless communication, and the frequency (traffic) of communication. Consider a case in which fixed-fee contract is signed by the distributed power source 16 and a telecommunications carrier. In this case, the wireless communication fee is a fixed fee. Consider another case in which pay-per-use contract is signed by the distributed power source 16 and a telecommunications carrier. In this case, the wireless communication fee is determined depending on the amount of wireless communication. Assume that a fee in accordance with the amount of communication is published by the telecommunications carrier and stored in the wireless communication fee information 42F in advance.

The amount of communication can be calculated based on the cycle of monitoring and control of the distributed power source 16 and the amount of each communication for monitoring and control. Assume that the amount of communication does not depend on an information processing system 13 that executes the monitoring-control service. In other words, the wireless communication fee occurs whenever the monitoring service is executed by any information processing system 13.

The following describes the penalty charge. As described above, the penalty charge is a penalty charge that incurs when any electrical-power control requirement indicated by the electrical-power control requirement information acquired by the control requirement acquisition unit 44 is not satisfied. In other words, the penalty charge is money payable to the operator of the external system 20 or a client in an electrical power market by the operator of the monitoring-control system 10 when any electrical-power control requirement indicated by the electrical-power control requirement information cannot be achieved.

The penalty charge is calculated by the penalty charge calculation unit 48G. The penalty charge calculation unit 48G calculates the penalty charge by using, for example, any of four kinds of calculation methods below.

Penalty charge calculation method I

For example, the calculation unit 48C calculates the operational cost including the penalty charge for an information processing system 13 for which a predicted value of the monitoring-control cycle of the distributed power source 16 to be monitored and controlled by the information processing system 13 exceeds a monitoring-control cycle in accordance with the electrical-power control requirement information of the distributed power source 16. The penalty charge is calculated by the penalty charge calculation unit 48G.

Specifically, the penalty charge calculation unit 48G calculates the penalty charge by using Expression (3) below.

$$\text{if the predicted value of a monitoring-control}$$
$$\text{cycle that can be achieved at } Xj \leq \text{a required monitoring-}$$
$$\text{control cycle, then 0, else } \gamma \qquad (3)$$

In Expression (3), y represents the penalty charge amount.

Expression (3) indicates that the penalty charge is zero when the predicted value of the monitoring-control cycle that can be achieved at Xj is equal to or shorter than the required monitoring-control cycle or the penalty charge is "y" when the predicted value exceeds the monitoring-control cycle. The value y may be, for example, the amount of a basic penalty charge set in advance.

The predicted value of the monitoring-control cycle that can be achieved at Xj is the predicted value of the monitoring-control cycle that can be achieved for the distributed power source 16 to be monitored and controlled by the information processing system 13. The required monitoring-control cycle is the cycle of monitoring and control of the distributed power source 16, which is included in the electrical-power control requirement information.

The predicted value of the monitoring-control cycle that can be achieved by the information processing system 13 is calculated by the monitoring-control cycle prediction unit 48H. The monitoring-control cycle that can be achieved for the distributed power source 16 is expressed by the sum of a communication time and a calculation time (time in which a control value is calculated in the monitoring-control service). The communication time largely changes, depending on the information processing system 13 that executes the monitoring-control service. Thus, the monitoring-control service may be executed in advance to measure the communication time and the calculation time in advance for each of the information processing systems 13 included in the service program allocation system 1. The monitoring-control cycle prediction unit 48H may calculate the predicted value of the monitoring-control cycle that can be achieved for each of the information processing systems 13 by using the communication time and the calculation time measured in advance. Then, the penalty charge calculation unit 48G may calculate the penalty charge based on Expression (3) described above by using the predicted value of the monitoring-control cycle that can be achieved, which is calculated by the monitoring-control cycle prediction unit 48H.

The communication time and the calculation time change, depending on a time slot in which the monitoring-control service is executed, in some cases. For example, the amount of communication increases in the daytime, and accordingly, the communication time potentially increases. Thus, the monitoring-control cycle prediction unit 48H records the communication time and the calculation time as temporally sequential data for each of the information processing systems 13. Then, the monitoring-control cycle prediction unit 48H may use a temporally sequential data prediction technology such as an autoregressive integrated moving average (ARIMA) model to calculate the predicted value of the monitoring-control cycle that can be achieved by the information processing system 13.

Penalty charge calculation method II

For example, the calculation unit 48C calculates the operational cost including the penalty charge for an information processing system for which a predicted achievement ratio is lower than a given ratio. The predicted achievement ratio is an achievable ratio of a condition that the predicted value of the monitoring-control cycle of the distributed power source 16 to be monitored and controlled by the information processing system 13 is equal to or shorter than the monitoring-control cycle in accordance with the electrical-power control requirement information of the distributed power source 16. The penalty charge is calculated by the penalty charge calculation unit 48G.

Specifically, the penalty charge calculation unit 48G calculates the penalty charge by using Expression (4) below.

$$\text{If the achievable ratio of "the predicted value of the monitoring-control cycle that is achievable at } X_j \leq \text{ the required monitoring-control cycle"} \geq N \text{ \%, then 0, else } \gamma \quad (4)$$

Expression (4) indicates that the penalty charge is zero when the achievable ratio of a condition, which satisfies "the predicted value of the monitoring-control cycle that is achievable at $X_j \leq$ the required monitoring-control cycle" as in the above-described expression, is equal to or higher than N %, or indicates that the penalty charge is "y" when the condition is not satisfied.

N % is a given ratio and may be determined in advance. For "y", a preset basic penalty charge amount is usable.

Similarly to the penalty charge calculation method I, the predicted value of the monitoring-control cycle that can be achieved by the information processing system 13 may be calculated by the monitoring-control cycle prediction unit 48H. Then, the penalty charge calculation unit 48G may calculate the penalty charge based on Expression (4) by using the predicted value calculated by the monitoring-control cycle prediction unit 48H and the cycle of monitoring and control of the distributed power source 16, which is included in the electrical-power control requirement information.

Penalty charge calculation method III

For example, the calculation unit 48C calculates the operational cost including, as the penalty charge, a result of multiplication of a predicted non-achievement ratio by a basic penalty charge set in advance. The predicted non-achievement ratio is a non-achievable ratio of a condition that the predicted value of the monitoring-control cycle of the distributed power source 16 to be monitored and controlled by the information processing system 13 is equal to or shorter than the cycle of monitoring and control of the distributed power source 16. The cycle of monitoring and control of the distributed power source 16 is the monitoring-control cycle of the monitoring-control target distributed power source 16 in accordance with the electrical-power control requirement information. The penalty charge is calculated by the penalty charge calculation unit 48G.

Specifically, the penalty charge calculation unit 48G calculates the penalty charge by using Expression (5) below.

$$\gamma = \text{the non-achievement ratio of "the predicted value of the monitoring-control cycle that can be achieved at } X_j \leq \text{ the required monitoring-control cycle"} \times \gamma a \quad (5)$$

The value ya is the basic penalty charge set in advance.

Similarly to the penalty charge calculation method I, the predicted value of the monitoring-control cycle that can be achieved by the information processing system 13 may be calculated by the monitoring-control cycle prediction unit 48H. Then, the penalty charge calculation unit 48G may calculate the penalty charge based on Expression (5) by using the predicted value calculated by the monitoring-control cycle prediction unit 48H and the cycle of monitoring and control of the distributed power source 16, which is included in the electrical-power control requirement information.

Penalty charge calculation method IV

For example, the calculation unit 48C may calculate the operational cost including, as the penalty charge, a result of multiplication of the basic penalty charge set in advance by a weighting value.

Paying the penalty charge damages reliability of the monitoring-control system 10. As such, the penalty charge calculation unit 48G sets a weighting value in accordance with the reliability decrease. The weighting value may be any value that exceeds one. The calculation unit 48C may calculate, as the penalty charge, a result of multiplication of the basic penalty charge by the set weighting value, and calculate the operational cost using Expression (1) described above. The calculation unit 48C may use, as the basic penalty charge, a money amount set in advance or may use, as the basic penalty charge, the penalty charge calculated by any of the above-described calculation methods I to III.

The calculation unit 48C calculates, by using Expression (1) described above, the operational cost for each of the information processing systems 13 specified by the specifying unit 48A and outputs the calculated operational cost to the execution target determination unit 48B.

The execution target determination unit 48B uses the operational cost calculated by the calculation unit 48C to determine the information processing system 13 for which the operational cost is equal to or lower than a given cost, as an execution target system. The given cost may be determined in advance. The execution target determination unit 48B may determine the information processing system 13 for which the operational cost is minimum, as the execution target system. The number of the information processing systems 13 determined by the execution target determination unit 48B is not limited to one but may be two or more. For example, the execution target determination unit 48B may determine the information processing system 13 for which the operational cost is equal to or lower than the given cost, as the execution target system. In this case, the monitoring-control service can be simultaneously executed at a plurality of places (the information processing systems 13), which enhances fault tolerance of monitoring-control.

In this manner, the execution target determination unit 48B determines an execution target information processing system 13 by using the operational cost including the execution fee of the monitoring-control service in accordance with the electrical-power control requirement information. Accordingly, the execution target determination unit 48B can determine an information processing system 13 for which the operational cost is equal to or lower than the given cost.

As described above, the first information processing system 12 is communicably connected to the distributed power source 16 via the internet 22. The second information processing system 14 is communicably connected to the distributed power source 16, not via the internet 22. Thus, the cycle of monitoring and control of the distributed power source 16 by the second information processing system 14 is shorter than that by the first information processing system 12. Accordingly, the penalty charge amount tends to be smaller for the second information processing system 14 than for the first information processing system 12. In contrast, the fee of execution of the monitoring-control service by the second information processing system 14 tends to be higher than that by the first information processing system 12. As such, the information processing system 13 can be determined with trade-off of these conditions taken into account, by the execution target determination unit 48B's determination of the information processing system 13 using Expression (1) described above.

The execution target determination unit 48B may determine the single information processing system 13 for which the operational cost is minimum, as an execution target but may determine the information processing system 13 for which the operational cost is equal to or lower than the given cost, as the execution target.

In this case, the execution target determination unit 48B additionally specifies a plurality of the information processing systems 13 among the information processing systems 13 specified by the specifying unit 48A. Assume that the number of the additionally specified information processing systems 13 is M (M is an integer equal to or larger than two). Then, the execution target determination unit 48B may recalculate, as the operational cost of each of the M specified information processing systems 13, a money amount obtained by dividing the operational cost calculated by the calculation unit 48C by M. Then, the execution target determination unit 48B may determine the information processing system 13 as an execution target of the monitoring-control service by using the recalculated operational cost.

The following describes the allocation unit 48D. The allocation unit 48D allocates, to an execution target system that is the information processing system 13 determined as an execution target of the monitoring-control service by the execution target determination unit 48B, the monitoring-control service in accordance with electrical-power control requirements indicated by the electrical-power control requirement information.

The allocation of the monitoring-control service means distributing the monitoring-control service that is a computer program for executing monitoring-control indicated by the electrical-power control requirement information acquired by the control requirement acquisition unit 44 to the information processing system 13 determined by the execution target determination unit 48B, and instructing execution of the monitoring-control service.

The allocation unit 48D may use a tool provided by a provider used by the information processing system 13 determined by the execution target determination unit 48B, thereby executing the monitoring-control service at the information processing system 13. For example, the allocation unit 48D may produce and execute a virtual machine in the information processing system 13 determined by the execution target determination unit 48B and may execute the monitoring-control service on the virtual machine. In this case, the allocation unit 48D may use, for example, open-source software referred to as a container and configured to provide an OS-level virtualization environment. The open-source software is, for example, Docker. The allocation unit 48D may forward an image of the monitoring-control service executable on the container to the information processing system 13 determined by the execution target determination unit 48B, thereby executing the monitoring-control service at the information processing system 13.

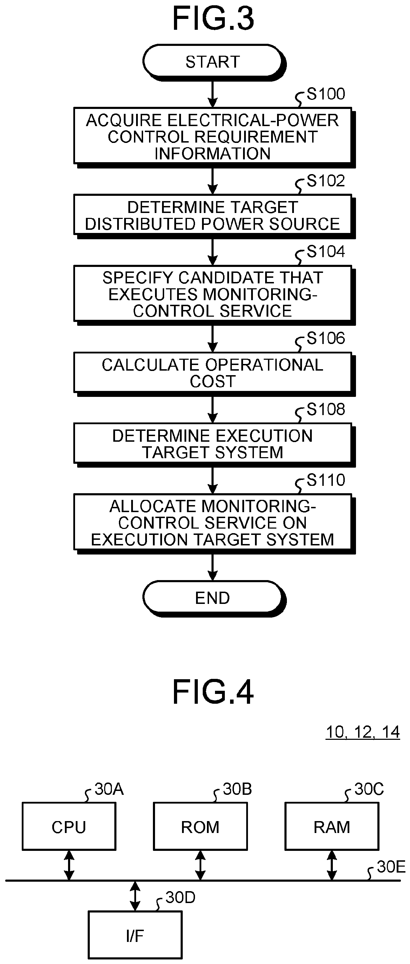

The following describes the process of monitoring-control processing executed by the monitoring-control system 10 of the present arrangement. FIG. 3 is a flowchart illustrating an exemplary process of the monitoring-control processing executed by the monitoring-control system 10 of the present arrangement.

The control requirement acquisition unit 44 of the monitoring-control system 10 acquires the electrical-power control requirement information from the external system 20 (step S100).

The control target determination unit 46 determines a target distributed power source that is the monitoring-control target distributed power source 16 based on the electrical-power control requirement information acquired at step S100 (step S102).

The specifying unit 48A specifies the candidate information processing system 13 that executes the monitoring-control service (step S104).

The calculation unit 48C calculates, for each of the information processing systems 13 specified at step S104, the operational cost including at least the execution fee of the monitoring-control service by using the electrical-power control requirement information acquired at step S100 (step S106) .

The execution target determination unit 48B determines, as an execution target system, the information processing system 13 for which the operational cost calculated at step S106 is equal to or lower than a given cost among the information processing systems 13 specified at step S104 (step S108).

The allocation unit 48D allocates, to the execution target system that is the information processing system 13 determined at step S108, the monitoring-control service in accordance with electrical-power control requirements indicated by the electrical-power control requirement information acquired at step S100 (step S110). Then, the present routine is ended.

As described above, the monitoring-control system 10 of the present arrangement includes the control target determination unit 46 and the execution target determination unit 48B. The control target determination unit 46 determines a target distributed power source that is the monitoring-control target distributed power source 16 in accordance with the electrical-power control requirement information indicating electrical-power control requirements for the distributed power source 16 connected to a network. The execution target determination unit 48B determines, as an execution target system that executes the monitoring-control service for the target distributed power source, the information processing system 13 for which the operational cost of the monitoring-control service in accordance with the electrical-power control requirement information is equal to or lower than a given cost among a plurality of the information processing systems 13 connected communicably to the target distributed power source.

In this manner, in the monitoring-control system 10 of the present arrangement, the information processing system 13 that executes the monitoring-control service is determined by using the operational cost of the monitoring-control service by each of the information processing systems 13.

Thus, the monitoring-control system 10 of the present arrangement can determine, by using the operational cost based on an actual execution environment, the information processing system 13 that executes the monitoring-control service.

Thus, the monitoring-control system 10 of the present arrangement can reduce the cost of monitoring and control of a plurality of distributed power sources 16 connected to a network.

As described above, each of the distributed power sources 16 is monitored and controlled based on the electrical-power control requirement information. In other words, the distributed power source 16 is controlled based on a result of trading in an electrical power market such as the external system 20.

For example, consider a case in which trading of "electrical power at the electrical power amount of 10 kWh in a time slot" is signed in an electrical power market. In this case, the seller side needs to provide electrical power at the amount of 10 kWh by, for example, controlling discharging of the distributed power source 16. Then, the buyer side charges the provided electrical power to another of the distributed power sources 16 or consumes the provided electrical power at an instrument. When the traded electrical power cannot be provided due to, for example, failure at monitoring-control of the distributed power source 16, the seller side pays the penalty charge.

The monitoring-control system 10 of the present arrangement determines, by using, for example, the operational cost including the execution fee, the information processing system 13 that executes the monitoring-control service.

Thus, the monitoring-control system 10 of the present arrangement can minimize the operational cost when a distributed power source is monitored and controlled based on a result of trading in an electrical power market. The monitoring-control system 10 of the present arrangement is excellently applicable to a system that operates a virtual power plant (VPP) or the like.

The monitoring-control system 10 of the present arrangement determines the information processing system 13 that executes the monitoring-control service by using the operational cost including the execution fee and the penalty charge that incurs when any electrical-power control requirement indicated by the electrical-power control requirement information is unsatisfied.

Thus, the monitoring-control system 10 of the present arrangement can further reduce the cost of monitoring and control of a plurality of distributed power sources 16 connected to a network.

When a time constant of traded electrical power is long, the distributed power source 16 can be controlled by the cloud system 11. The long time constant means, for example, a case in which "10 kWh is reduced in the duration of 30 minutes". On the other hand, when the time constant is short, there is a possibility that, by the control by the cloud system 11, the control cannot be in time. For example, when "a right to control charging-discharging of a secondary battery at the interval of one second" is traded in a market, the distributed power source 16 needs to be monitored and controlled at the interval of one second.

Communication delay between the cloud system 11 and the distributed power source 16 is potentially several tens milliseconds to several hundred milliseconds. In addition, a time for performing, on the cloud system 11 side, calculation for determining a control value is needed. As such, when the communication delay is several hundred milliseconds, it is potentially difficult to monitor and control the distributed power source 16 at the interval of one second. Furthermore, the internet 22 exists between the cloud system 11 and the distributed power source 16. Since the quality of communication of the internet 22 is of a best-effort type as described above, it is potentially difficult to monitor and control the distributed power source 16 at the interval of one second.

A multi-access edge computing (MEC) environment proposed by the European telecommunications standards institute (ETSI) is an edge computing environment provided by a communication carrier or the like. Each of the second information processing systems 14 as an MEC environment is established on the wireless base station 18 side of wireless communication such as 4G or 5G. Similarly to the cloud system 11 as a cloud environment, a user can execute an application in the second information processing system 14 as an MEC environment by paying a usage fee.

When the distributed power source 16 is monitored and controlled in an MEC environment, the distributed power source 16 can be monitored and controlled not via the internet 22. This can reduce the communication delay and guarantee the quality of communication. However, the usage fee of the second information processing system 14 as an MEC environment is thought to be higher than that of the cloud system 11 (the first information processing system 12) as a cloud environment. This is because the cloud system 11 is a calculator system larger than the second information processing system 14 and thus economics of scale is achieved.

Thus, in the monitoring-control system 10 of the present arrangement, the execution target determination unit 48B determines the information processing system 13 by using Expression (1) described above. Accordingly, the monitoring-control system 10 can determine, with trade-off of these conditions taken into account, the information processing system 13 as an execution target system that executes the monitoring-control service.

Specifically, the monitoring-control system 10 of the present arrangement can execute the monitoring-control service in the first information processing system 12 as a cloud environment when the time constant of traded electrical power is long, or can execute the monitoring-control service in the second information processing system 14 as an MEC environment when the time constant is short.

Thus, in addition to the above-described effect, the monitoring-control system 10 of the present arrangement can reduce the operational cost of a cloud environment and an MEC environment while accurately performing electrical power supply based on the electrical-power control requirement information.

FIG. 4 is an exemplary hardware configuration diagram of the monitoring-control system 10, the first information processing system 12, and the second information processing system 14 of the present arrangement.

The monitoring-control system 10, the first information processing system 12, and the second information processing system 14 of the present arrangement each has a hardware configuration of a normal computer including a control device such as a CPU 30A, storage devices such as a read only memory (ROM) 30B, a random access memory (RAM) 30C, and a HDD, an I/F unit 30D as an interface to various instruments, and a bus 30E connecting the components.

In each of the monitoring-control system 10, the first information processing system 12, and the second information processing system 14 of the present arrangement, each above-described component is achieved on the computer as the CPU 30A reads a computer program from the ROM 30B onto the RAM 30C and executes the computer program.

A computer program for executing each above-described processing executed at the monitoring-control system 10, the first information processing system 12, and the second information processing system 14 of the present arrangement may be incorporated in the ROM 30B in advance and provided.

The computer program for executing each above-described processing executed at the monitoring-control system 10 of the present arrangement may be stored as a file in an installable or executable format in a computer-readable storage medium such as a CD-ROM, a CD-R, a memory card, a digital versatile disc (DVD), or a flexible disk (FD) and provided as a computer program product. The computer program for executing each above-described processing executed at the monitoring-control system 10 of the present arrangement may be stored on a computer connected to a network such as the internet and may be downloaded and provided via the network. The computer program for executing each above-described processing executed at the monitoring-control system 10 of the present arrangement may be provided or distributed via a network such as the internet.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. According to an arrangement, a monitoring-control system (10) includes a control target determination unit (46) and an execution target determination unit (48B). The control target determination unit (46) determines a target distributed power source (16) that is the monitoring-control target the distributed power source (16) in accordance with electrical-power control requirement information indicating electrical-power control requirements for the distributed power source (16) connected to a network. The execution target determination unit (48B) determines, as an execution target system that executes a monitoring-control service for the target distributed power source (16), the information processing system (13) for which an operational cost of the monitoring-control service in accordance with the electrical-power control requirement information is equal to or lower than a given cost among a plurality of the information processing systems (13) connected communicably to the target distributed power source (16).

Example 2. In the monitoring-control system (10) according to example 1, the operational cost includes an execution fee that incurs by using the information processing system (13).

Example 3. The monitoring-control system (10) according to example 2 further includes a calculation unit. The calculation unit is configured to calculate the operational cost of each of the information processing systems (13). The calculation unit calculates, for each of the information processing systems (13), the operational cost including the execution fee and a penalty charge that incurs when an electrical-power control requirement indicated by the electrical-power control requirement information is unsatisfied.

Example 4. In the monitoring-control system (10) according to example 3, the calculation unit calculates the operational cost including the penalty charge for the information processing system (13) for which a predicted value of a cycle of monitoring and control of the target distributed power source (16) by the information processing system (13) exceeds the cycle of monitoring and control of the target distributed power source (16) in accordance with the electrical-power control requirement information.

Example 5. In the monitoring-control system (10) according to example 3, the calculation unit calculates the operational cost including the penalty charge for the information processing system (13) for which a predicted achievement ratio is lower than a given ratio. Where, the predicted achievement ratio is an achievable ratio of a condition that a predicted value of a cycle of monitoring and control of the target distributed power source (16) by the information processing system (13) is equal to or shorter than the cycle of monitoring and control of the target distributed power source (16) in accordance with the electrical-power control requirement information.

Example 6. In the monitoring-control system (10) according to example 3, the calculation unit calculates the operational cost including, as the penalty charge, a result of multiplication of, by a basic penalty charge set in advance, a predicted non-achievement ratio that is a non-achievable ratio of a condition that a predicted value of a cycle of monitoring and control of the target distributed power source (16) by the information processing system (13) is equal to or shorter than the cycle of monitoring and control of the target distributed power source (16) in accordance with the electrical-power control requirement information.

Example 7. In the monitoring-control system (10) according to example 3, the calculation unit calculates the operational cost including, as the penalty charge, a result of multiplication of a basic penalty charge set in advance by a weighting value.

Example 8. The monitoring-control system (10) according to any one of examples 1 to 7, further includes a specifying unit (48A) configured to specify, as a candidate that executes the monitoring-control service, the information processing system (13) including the first information processing system (12) communicatively connected to the target distributed power source (16) via internet and the second information processing system (14) communicatively connected to the target distributed power source (16), not via internet. The execution target determination unit (48B) determines, as the execution target system, the information processing system (13) for which the operational cost is equal to or lower than the given cost among the specified information processing systems (13).

Example 9. In the monitoring-control system (10) according to example 8, the operational cost includes an execution fee that incurs by using the first information processing system (12) or the second information processing system (14).

Example 10. The monitoring-control system (10) according to any one of examples 1 to 9 further includes an allocation unit configured to allocate, to the execution target system, the monitoring-control service in accordance with the electrical-power control requirement indicated by the electrical-power control requirement information.

Example 11. A monitoring-control method, implemented by a computer, includes: determining the target distributed power source (16) that is a monitoring-control target distributed power source (16) in accordance with electrical-power control requirement information indicating electrical-power control requirements for the distributed power source connected to a network; and determining, as an execution target system that executes a monitoring-control service for the target distributed power source (16), the information processing system (13) for which an operational cost of the monitoring-control service in accordance with the electrical-power control requirement information is equal to or lower than a given cost among a plurality of the information processing systems (13) connected communicably to the target distributed power source (16).

Example 12. A computer program product has a computer readable medium storing a monitoring-control program thereon, and the monitoring-control program, when executed by a computer, causes the computer to perform: determining the target distributed power source (16) that is a monitoring-control target distributed power source (16) in accordance with electrical-power control requirement information indicating electrical-power control requirements for a distributed power source (16) connected to a network; and determining, as an execution target system that executes a monitoring-control service for the target distributed power source (16), an information processing system for which an operational cost of the monitoring-control service in accordance with the electrical-power control requirement information is equal to or lower than a given cost among a plurality of the information processing systems (13) connected communicably to the target distributed power source (16) .

**Claims**

1. A monitoring-control system (10) comprising:

   a control target determination unit (46) configured to determine a target distributed power source (16) that is the monitoring-control target distributed power source (16) in accordance with electrical-power control requirement information indicating electrical-power control requirements for a distributed power source connected to a network; and
   an execution target determination unit (48B) configured to determine, as an execution target system that executes a monitoring-control service for the target distributed power source (16), an information processing system (13) for which an operational cost of the monitoring-control service in accordance with the electrical-power control requirement information is equal to or lower than a given cost among a plurality of information processing systems (13) connected communicably to the target distributed power source (16).

2. The monitoring-control system (10) according to claim 1, wherein the operational cost includes an execution fee that incurs by using the information processing system (13).

3. The monitoring-control system (10) according to claim 2, further comprising:

   a calculation unit configured to calculate the operational cost of each of the information processing systems (13), wherein
   the calculation unit calculates, for each of the information processing systems (13), the operational cost including the execution fee and a penalty charge that incurs when an electrical-power control requirement indicated by the electrical-power control requirement information is unsatisfied.

4. The monitoring-control system (10) according to claim 3, wherein the calculation unit calculates the operational cost including the penalty charge for the information processing system (13) for which a predicted value of a cycle of monitoring and control of the target distributed power source (16) by the information processing system (13) exceeds the cycle of monitoring and control of the target distributed power source (16) in accordance with the electrical-power control requirement information.

5. The monitoring-control system (10) according to claim 3, wherein the calculation unit calculates the operational cost including the penalty charge for the information processing system (13) for which a predicted achievement ratio is lower than a given ratio, the predicted achievement ratio being an achievable ratio of a condition that a predicted value of a cycle of monitoring and control of the target distributed power source (16) by the information processing system (13) is equal to or shorter than the cycle of monitoring and control of the target distributed power source (16) in accordance with the electrical-power control requirement information.

6. The monitoring-control system (10) according to claim 3, wherein the calculation unit calculates the operational cost including, as the penalty charge, a result of multiplication of, by a basic penalty charge set in advance, a predicted non-achievement ratio that is a non-achievable ratio of a condition that a predicted value of a cycle of monitoring and control of the target distributed power source (16) by the information processing system (13) is equal to or shorter than the cycle of monitoring and control of the target distributed power source (16) in accordance with the electrical-power control requirement information.

7. The monitoring-control system (10) according to claim 3, wherein the calculation unit calculates the operational cost including, as the penalty charge, a result of multiplication of a basic penalty charge set in advance by a weighting value.

8. The monitoring-control system (10) according to any one of claims 1 to 7, further comprising a specifying unit (48A) configured to specify, as a candidate that executes the monitoring-control service, the information processing system (13) including a first information processing system (12) communicatively connected to the target distributed power source (16) via internet and the second information processing system (14) communicatively connected to the target distributed power source (16), not via internet, wherein

the execution target determination unit (48B) determines, as the execution target system, the information processing system (13) for which the operational cost is equal to or lower than the given cost among the specified information processing systems (13).

9. The monitoring-control system (10) according to claim 8, wherein the operational cost includes an execution fee that incurs by using the first information processing system (12) or the second information processing system (14).

10. The monitoring-control system (10) according to any one of claims 1 to 9, further comprising an allocation unit configured to allocate, to the execution target system, the monitoring-control service in accordance with the electrical-power control requirement indicated by the electrical-power control requirement information.

11. A monitoring-control method implemented by a computer, the method comprising:

determining a target distributed power source (16) that is the monitoring-control target distributed power source (16) in accordance with electrical-power control requirement information indicating electrical-power control requirements for the distributed power source (16) connected to a network; and
determining, as an execution target system that executes a monitoring-control service for the target distributed power source (16), an information processing system (13) for which an operational cost of the monitoring-control service in accordance with the electrical-power control requirement information is equal to or lower than a given cost among a plurality of information processing systems (13) connected communicably to the target distributed power source (16).

12. A computer program product having a computer readable medium storing a monitoring-control program thereon, wherein the monitoring-control program, when executed by a computer, causes the computer to perform:

determining a target distributed power source (16) that is the monitoring-control target distributed power source (16) in accordance with electrical-power control requirement information indicating electrical-power control requirements for the distributed power source (16) connected to a network; and
determining, as an execution target system that executes a monitoring-control service for the target distributed power source (16), an information processing system (13) for which an operational cost of the monitoring-control service in accordance with the electrical-power control requirement information is equal to or lower than a given cost among a plurality of information processing systems (13) connected communicably to the target distributed power source (16).

# FIG.1

# FIG.2

MONITORING-CONTROL SYSTEM ⟋10

STORAGE UNIT ⟋42

MONITORING-CONTROL UNIT ⟋40

OPTIMUM ALLOCATION UNIT ⟋48

CALCULATION UNIT ⟋48C

DISTRIBUTED POWER SOURCE INFORMATION ⟋42A

WIRELESS BASE STATION INFORMATION ⟋42B

CORE NETWORK INFORMATION ⟋42C

FIRST INFORMATION PROCESSING SYSTEM INFORMATION ⟋42D

SECOND INFORMATION PROCESSING SYSTEM INFORMATION ⟋42E

WIRELESS COMMUNICATION FEE INFORMATION ⟋42F

EXECUTION FEE CALCULATION UNIT ⟋48E

COMMUNICATION FEE CALCULATION UNIT ⟋48F

PENALTY CHARGE CALCULATION UNIT ⟋48G

MONITORING-CONTROL CYCLE PREDICTION UNIT ⟋48H

SPECIFYING UNIT ⟋48A

EXECUTION TARGET DETERMINATION UNIT ⟋48B

ALLOCATION UNIT ⟋48D

CONTROL REQUIREMENT ACQUISITION UNIT ⟋44

CONTROL TARGET DETERMINATION UNIT ⟋46

EXTERNAL SYSTEM ⟋20

INFORMATION PROCESSING SYSTEM ⟋13 (12, 14)

EP 3 813 228 A1

# FIG.3

START

S100
ACQUIRE ELECTRICAL-POWER CONTROL REQUIREMENT INFORMATION

S102
DETERMINE TARGET DISTRIBUTED POWER SOURCE

S104
SPECIFY CANDIDATE THAT EXECUTES MONITORING-CONTROL SERVICE

S106
CALCULATE OPERATIONAL COST

S108
DETERMINE EXECUTION TARGET SYSTEM

S110
ALLOCATE MONITORING-CONTROL SERVICE ON EXECUTION TARGET SYSTEM

END

# FIG.4

<u>10, 12, 14</u>

30A
CPU

30B
ROM

30C
RAM

30E

30D
I/F

Europäisches
Patentamt

European
Patent Office

Office européen
des brevets

# EUROPEAN SEARCH REPORT

Application Number

EP 20 19 3588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/302511 A1 (FOSTER SCOTT [US] ET AL) 19 October 2017 (2017-10-19)<br>* figures 4,5 *<br>* paragraph [0012] *<br>* paragraph [0022] *<br>* paragraph [0078] *<br>* paragraph [0108] - paragraph [0113] * | 1-12 | INV.<br>H02J13/00<br>G06Q10/04<br>G06Q50/06 |
| A | US 2018/128862 A1 (SATOH HIROKI [JP] ET AL) 10 May 2018 (2018-05-10)<br>* figures 1,3,16 *<br>* paragraph [0056] *<br>* paragraph [0143] - paragraph [0145] * | 1-12 | |
| A | WO 2013/190546 A1 (NATION E LTD [IL]) 27 December 2013 (2013-12-27)<br>* figures 1B,11,13,16 * | 1-12 | |

| | |
|---|---|
| | TECHNICAL FIELDS SEARCHED (IPC) |
| | H02J<br>G06Q |

The present search report has been drawn up for all claims

| Place of search | Date of completion of the search | Examiner |
|---|---|---|
| Munich | 9 February 2021 | Despis, Enguerran |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 3588

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2021

| Patent document cited in search report | | Publication date | Patent family member(s) | | Publication date |
|---|---|---|---|---|---|
| US 2017302511 | A1 | 19-10-2017 | CA | 3054546 A1 | 31-08-2017 |
| | | | PH | 12018501801 A1 | 17-06-2019 |
| | | | US | 2017302511 A1 | 19-10-2017 |
| | | | WO | 2017147476 A1 | 31-08-2017 |
| US 2018128862 | A1 | 10-05-2018 | JP | 6347765 B2 | 27-06-2018 |
| | | | JP | 2017005891 A | 05-01-2017 |
| | | | US | 2018128862 A1 | 10-05-2018 |
| | | | WO | 2016199469 A1 | 15-12-2016 |
| WO 2013190546 | A1 | 27-12-2013 | EP | 2862076 A1 | 22-04-2015 |
| | | | WO | 2013190546 A1 | 27-12-2013 |

EPO FORM P0459

For more details about this annex : see Official Journal of the European Patent Office, No. 12/82

**REFERENCES CITED IN THE DESCRIPTION**

**Patent documents cited in the description**

- JP 2017143365 A